# FASCICULE DE BREVET EUROPEEN

(11) **EP 2 146 228 B1**
(45) Date de publication et mention de la délivrance du brevet: **02.04.2014**
(21) Numéro de dépôt: 09165082.0
(22) Date de dépôt: 09.07.2009
(51) Int. Cl.: G02B 3/12, G02C 7/08, G02B 5/30, G02F 1/1333

(54) **Couche d'alignement de cristaux liquides déposée et frottée avant réalisation des microstructures**
Flüssigkristall-Orientierungsschicht, die vor der Herstellung von Mikrostrukturen aufgebracht und gerieben wird
Liquid crystal alignment layer deposited and rubbed before creating microstructures

(30) Priorité: 15.07.2008 FR 0854796
(43) Date de publication de la demande: 20.01.2010
(73) Titulaire: Commissariat à l'Énergie Atomique et aux Énergies Alternatives, 75015 Paris (FR)
(72) Inventeur: Caplet, Stéphane, 38360, SASSENAGE (FR)
(74) Mandataire: Ilgart, Jean-Christophe

(56) Documents cités:
- EP-A- 0 782 037
- EP-A- 1 722 424
- WO-A-2007/141525
- FR-A- 2 888 953
- US-A- 3 978 580
- US-A1- 2008 123 045

## Description

### DOMAINE TECHNIQUE ET ART ANTERIEUR

L'invention concerne la réalisation de dispositifs contenant des cavités hermétiques de dimensions microniques délimitées par des parois, dans lesquelles un fluide fonctionnel -ici des cristaux liquides- est introduit.

L'invention s'applique aux domaines dans lesquels on utilise des cristaux liquides orientés dans des cavités scellées et notamment dans le domaine optique pour la réalisation de lentilles optiques ou de verres optiques,...

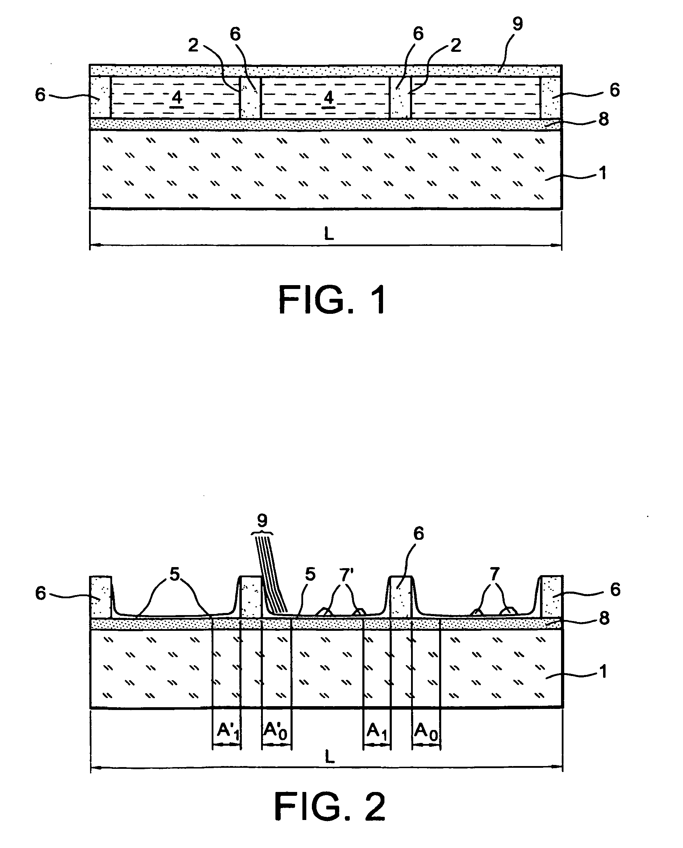

Un exemple d'un tel élément optique est illustré en figure 1. Il a une largeur L pouvant aller jusqu'à 100 mm ou plus.

Il comporte un réseau de micro-cuvettes ou de micro-cavités 2 indépendantes, séparées par des parois 6. Ces micro-cavités sont structurées sur un substrat souple et plan.

On peut ensuite les remplir avec un liquide 4 approprié à l'effet optique recherché.

Puis, les cavités sont fermées par une couche de fermeture 9 en un matériau souple, en général collé sur les sommets des parois 6.

L'ensemble est formé sur un support comportant, dans l'exemple illustré, un substrat 1 en un matériau tel que le quartz et une couche 8 en un matériau polymère.

Un tel élément d'optique peut contenir un nombre de micro-cuvettes qui peut être compris entre cent mille et dix millions.

Les parois 6 doivent être les moins visibles possibles, ce qui impose un fort rapport d'aspect (ou facteur de forme), avec des largeurs de paroi faibles pour une hauteur de résine dans la gamme souhaitée (5 à 50 µm).

Les parois, et les micro-cavités, peuvent être obtenues par un procédé de type micro-technologie collective, ou par gravure anisotrope d'une résine choisie pour ses propriétés structurales.

Dans certains cas, on souhaite utiliser, en tant que fluide fonctionnel dans les cavités, des cristaux liquides ; ceux-ci sont orientés dans le plan des cavités qui sont destinées à être scellées. L'alignement de ces cristaux liquides est réalisé par frottement d'une couche 5 de polyimide disposée essentiellement au fond de la cavité, mais aussi le long des parois 6.

Cette technique est représentée schématiquement sur la figure 2. Après dépôt de la couche 5 sur l'ensemble déjà structuré, celle-ci est frottée à l'aide d'une brosse dont les poils sont désignés par la référence 9.

Cette technique pose un certain nombre de problèmes.

D'abord, les zones de la couche 5, situées de part et d'autre des parois 6, et au pieds de celles-ci, et désignées par les références A0, A'0, A1, A'1 sur la figure 2, ne sont pas traitées de manière satisfaisante car elles sont mal frottées par la brosse. Il en résulte un effet optique dit « d'ombrage ».

Ces zones ont une largeur, dans le plan du dispositif, de l'ordre de quelques µm à une dizaine de µm. Elles témoignent d'une difficulté d'étalement uniforme de la couche 5 sur la topologie des structures.

En outre le passage de la brosse induit des projections 7, 7' de polyimide et des redépôts de polyimide, ou des contaminations particulaires autres.

Tout ceci, tant l'effet d'ombrage que la contamination particulaire, contribue à des défauts optiques, visibles sur la couche 5 de polyimide. Cette dernière couche étant sensible, il n'est pas possible de la réaliser avant le procédé de photolithographie des cavités. Or de tels défauts optiques sont rédhibitoires pour l'application optique visée.

Il se pose donc le problème de trouver un nouveau procédé de réalisation de cavités avec couche d'orientation de cristaux liquides.

Le document US 2008/0123045 décrit un dispositif dans lequel une couche d'alignement est réalisée avant des parois.

Le document US 3 978 580 décrit l'utilisation d'une couche sacrificielle.

### EXPOSÉ DE L'INVENTION

L'invention concerne d'abord un procédé de formation de cavités d' un dispositif micro-optique, comportant:
a) la formation, sur la surface plane d'un substrat support, d'une couche d'alignement de cristaux liquides,
b) puis le dépôt d'une couche sacrificielle de protection sur ladite couche d'alignement,
c) puis une gravure d'une partie d'au moins la couche sacrificielle pour définir la position des parois,
d) puis la formation de parois desdites cavités, dans les zones gravées de la couche sacrificielle et l'élimination de la couche sacrificielle de protection entre les parois des cavités, le fond desdites cavités étant formé par ladite couche d'alignement.

Selon l'invention, on génère d'abord la couche d'alignement, par exemple une couche de polyimide avec son frottement, avant la formation ou structuration des parois. La couche d'alignement peut donc être continue et sensiblement uniforme lors de son étalement, car les parois ne sont pas encore formées. Son frottement peut donc avoir lieu préalablement à la formation des parois, dans des conditions optimales.

Selon un mode de réalisation particulier, l'étape d) comporte un dépôt puis une gravure d'une couche de résine de façon à former lesdites parois des cavités.

Dans le cadre de l'invention, on protège la couche d'alignement par une couche sacrificielle, on réalise la structuration (formation des parois), et enfin on retire la couche sacrificielle. Cette dernière permet de conserver, à l'état actif, les propriétés de la couche d'alignement. On évite ainsi toutes les sources de contamination et de génération de défauts telles qu'expliquées ci-dessus en liaison avec la figure 2.

De préférence, la couche d'alignement est protégée par une couche sacrificielle en un matériau transparent.

Cette couche sacrificielle peut être une couche déposée, par exemple par dépôt sous vide par un procédé basse température, et elle est susceptible d'être retirée par un procédé doux vis-à-vis de la couche d'alignement sous jacente, tel qu'une chimie en voie humide. Cette couche sacrificelle est avantageusement en une silice ou en un matériau organosilicé, mais peut également être une résine.

Dans un mode de réalisation, un tel procédé comporte en outre, après l'étape b) et avant l'étape d) :
- la formation d'une couche de masque de gravure sur la couche sacrificielle et l'ouverture de cette couche de masque pour définir la position des parois,
- la gravure d'au moins la couche sacrificielle à travers la couche de masque,
   et, après la formation des parois mais avant l'élimination de la couche sacrificielle de protection :
- l'élimination de la couche de masque de gravure.

La couche d'alignement peut n'être pas gravée sous la couche sacrificielle. Dans ce cas, les parois sont formées au-dessus de, ou sur, la couche d'alignement, qui peut donc rester continue et uniforme d'une cavité à l'autre, sans être affectée par aucune des opérations de formation des parois.

En variante, le procédé comporte, avant l'étape d), une gravure de la couche d'alignement sous les zones gravées de la couche sacrificielle.

Un procédé selon l'invention peut comporter, en outre, avant l'étape d), une gravure du substrat sous les zones gravées de la couche d'alignement et de la couche sacrificielle.

Avant dépôt de la couche d'alignement, le dépôt d'une couche en ITO peut être réalisé, cette couche n'étant pas gravée avant l'étape d).

L'invention concerne également un procédé de formation d'un dispositif micro-optique à cristaux liquides, comportant:
- la formation de cavités de ce dispositif, comportant la mise en oeuvre d'un procédé tel que ci-dessus,
- l'introduction de cristaux liquides dans lesdites cavités du dispositif,
- la formation d'une couche de fermeture sur les parois des cavités.

La couche d'alignement peut être continue d'une cavité à l'autre et passer sous les parois.

Selon un mode de réalisation, les parois séparent les couches d'alignement de cavités voisines.

Une couche de matériau ITO peut être disposée sous la couche d'alignement. Cette couche est continue, et n'est pas gravée.

En variante, les pieds des parois sont situés dans le substrat.

Selon un exemple, la couche d'alignement est une couche de polyimide frotté.

Du point de vue géométrique, les parois peuvent avoir une hauteur de l'ordre de quelques µm à quelques dizaines de µm, par exemple supérieure à 10 µm, et/ou une largeur de l'ordre de quelques µm ou submicronique, par exemple inférieure à 5 µm ou comprise entre 5 µm et 0,5 µm.

### BRÈVE DESCRIPTION DES DESSINS

- La figure 1 représente une structure de cavité connue.
- La figure 2 représente un procédé connu de préparation d'une couche de polyimide.
- Les figures 3A-3E représentent des étapes d'un procédé de réalisation d'un dispositif comprenant des cavités.
- Les figures 4A-4G représentent certaines étapes de réalisation d'un procédé selon l'invention.
- Les figures 5A-5B représentent une variante d'un procédé.
- La figure 6 représente une opération de remplissage de cavités avec un liquide.

### EXPOSÉ DÉTAILLÉ DE MODES DE RÉALISATION PARTICULIERS

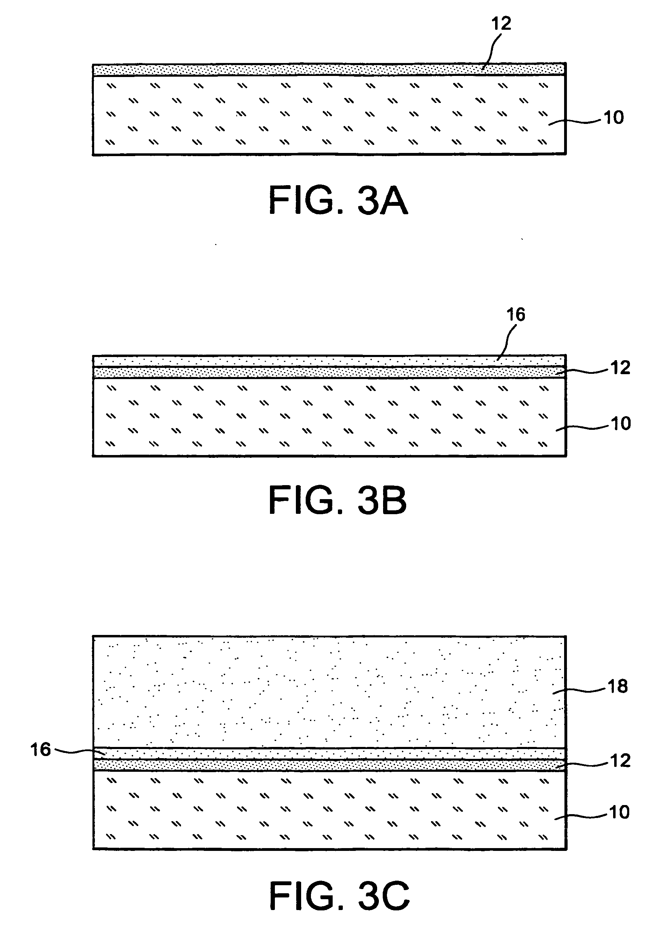

Un premier procédé va être décrit en liaison avec les figures 3A - 3E.

On forme d'abord un support, qui peut consister en un simple substrat 10, par exemple en un matériau polymère tel que le PET.

Sur la surface plane de ce même substrat 10, une couche plane ou un film plan 12, d'alignement de cristaux liquides, est déposé, par exemple par technique de type « Spincoating » ou par « Flexoprinting » (figure 3A). On prendra l'exemple d'un film 12 de polyimide ou un film de silice ou encore un film de PTFE (polytétrafluoroéthylène). Ce film peut avoir une épaisseur pouvant aller jusqu'à 20 µm. Il est continu sur le substrat 10.

Un frottement de ce film 12 peut être alors réalisé. Cette couche ou ce film peut être rainuré légèrement par frottement avec un tissu approprié.

Puis (figure 3B), en vue de la protection de la couche 12 d'alignement lors de la réalisation des parois 6, une couche sacrificielle continue 16 est déposée sur cette couche ou film 12. Cette couche 16 est avantageusement transparente pour favoriser les propriétés optiques du dispositif. C'est par exemple une couche de SiO₂ de 50 nm d'épaisseur. Une technique de dépôt possible est la technique PECVD.

La couche 12 d'alignement n'est pas dégradée au cours du processus qui suit, en particulier lorsque la couche sacrificielle 16 utilisée est une résine. Lorsque cette couche sacrificielle 16 est en silice, elle est préférentiellement déposée à basse température, pour éviter une dégradation du frottement de la couche 12 d'alignement.

On procède ensuite à la structuration des parois 6 des micro-cavités 4.

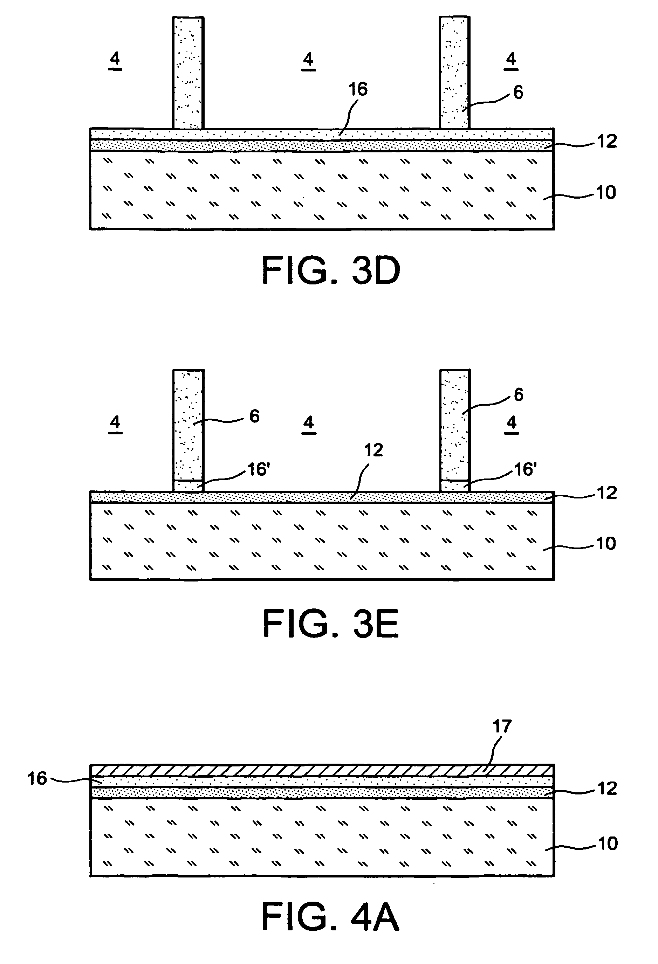

A cette fin (figure 3C) on dépose une résine épaisse 18 sur la couche sacrificielle 16. Cette résine est ensuite gravée (figure 3D), par exemple par lithographie, avec un masque approprié, ou par gravure ionique réactive (RIE) à l'aide d'un masque dur qui est éliminé ensuite. On forme ainsi les parois 6 des cavités 4.

La couche sacrificielle 16 n'est d'abord pas ou peu affectée par cette opération. Mais elle est ensuite éliminée en fond de chaque micro-cavité, sauf pour la portion de cette couche située sous les parois 6, afin de conserver l'adhérence de ces dernières (figure 3E). Il reste donc une portion 16' de matériau sacrificiel sous chaque paroi 6. On procède à cette étape par un procédé doux, sélectif par rapport à la couche 12, affectant cette dernière aussi peu que possible. Il s'agit par exemple d'une gravure au HF, avec un surfactant adéquat pour limiter au maximum la surgravure sous les parois 6. Le BE3O:1 donne de bons résultats.

I1 en résulte une structure comportant la couche 12 d'alignement, frottée, localisée au fond des cavités 4.

Cette couche est continue, plane, elle s'étend sous les parois 6, sous lesquelles subsiste un résidu 16' de couche sacrificielle.

Un mode de réalisation de l'invention va être décrit en liaison avec les figures 4A - 4E.

Les deux premières étapes sont identiques à celles décrites ci-dessus, en liaison avec les figures 3A et 3B. On forme d'abord un support, qui peut consister en un simple substrat 10, par exemple en un matériau polymère tel que le PET.

Sur la surface plane de ce même substrat 10, une couche plane ou un film plan 12, d'alignement de cristaux liquides, est déposé, par exemple par technique de type « Spincoating » ou par « Flexoprinting ». On prendra l'exemple d'un film 12 de polyimide ou un film de silice ou encore un film de PTFE (polytétrafluoroéthylène). Ce film peut avoir une épaisseur pouvant aller jusqu'à 20 µm. Il est continu sur le substrat 10.

Un frottement de ce film 12 peut être alors réalisé. Cette couche ou ce film peut être rainuré légèrement par frottement avec un tissu approprié.

Puis, en vue de la protection de la couche 12 d'alignement lors de la réalisation des parois 6, une couche sacrificielle continue 16 est déposée sur cette couche ou film 12. Cette couche 16 est avantageusement transparente pour favoriser les propriétés optiques du dispositif. C'est par exemple une couche de SiO₂ de 50 nm d'épaisseur. Une technique de dépôt possible est la technique PECVD.

La couche 12 d' alignement n'est pas dégradée au cours du processus qui suit, en particulier lorsque la couche sacrificielle 16 utilisée est une résine. Lorsque cette couche sacrificielle 16 est en silice, elle est préférentiellement déposée à basse température, pour éviter une dégradation du frottement de la couche 12 d'alignement.

A partir d'un substrat identique à celui de la figure 3B, on dépose (figure 4A) une couche 17 de masque dur que l'on structure. Cette couche est par exemple une couche 17 de chrome, de 50 nm d'épaisseur. On procède à une lithographie sur cette couche 17, qui peut ensuite être gravée par gravure ionique réactive (RIE) pour réaliser un masque approprié.

On peut continuer cette étape de gravure RIE pour ouvrir aussi la couche sacrificielle 16 ainsi que la couche 12 d'alignement. éventuellement, on peut ouvrir la couche 16 sans ouvrir la couche 12, ce qui permet de conserver une couche d'alignement continue pour obtenir une meilleure adhérence des couches supérieures.

Cette étape de gravure permet de définir la forme des futures parois 6 des cavités 4. Les parois seront en effet implantées dans les zones gravées.

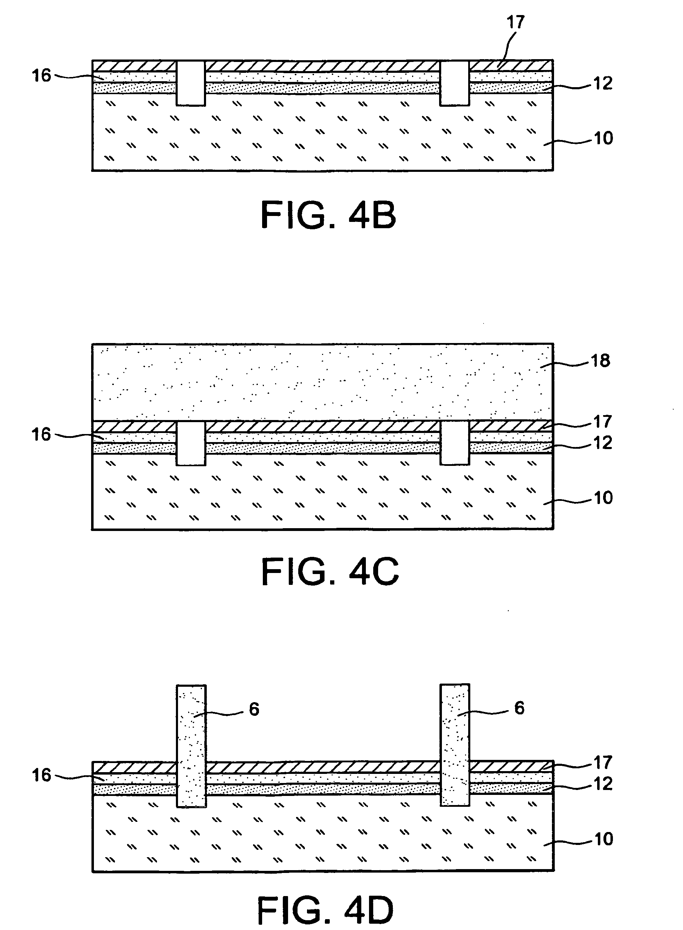

Une gravure, dans les couches 16 et 12 peut être prolongée dans le matériau du substrat 10, ce qui permet ensuite de renforcer la tenue mécanique des parois 6 (figure 4B).

Enfin, on procède au retrait de la résine utilisée pour la lithographie.

Une résine 18 (figure 4C) est ensuite étalée. Celle-ci pénètre dans les zones gravées, y compris éventuellement dans le substrat 10.

Puis, les parois 6 de la micro-cavité sont formées dans cette résine 18, par lithographie, insolation par la face arrière 10' du substrat 10 et développement (figure 4D). La face arrière 10' est celle opposée à la face sur laquelle les couches 12, 16, 17 ont été déposées.

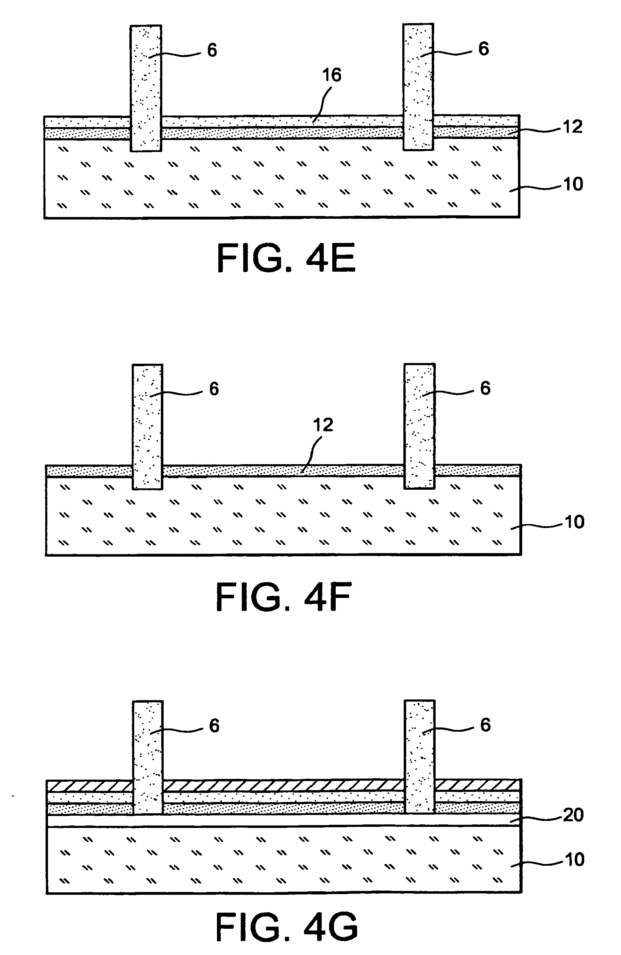

La couche 17 de masque est ensuite éliminée (figure 4E), par gravure humide au CrEtch (nom commercial d'une solution de gravure du chrome) pour le cas d'une couche en Cr.

La couche sacrificielle 16 est ensuite éliminée (figure 4F), là encore par un procédé doux, sélectif par rapport à la couche 12, affectant cette dernière aussi peu que possible. On met par exemple en oeuvre une attaque au HF et surfactant éventuel (voir indications déjà données ci-dessus en liaison avec la figure 3E). La couche d'alignement de chaque cavité est séparée, par les parois 6, de la couche d'alignement dans les cavités voisines.

Dans le cas de la présence d'une sous couche 20 en ITO (sous la couche 12 d'alignement, donc déposée avant celle-ci sur le substrat 10), la gravure des ouvertures s'arrête sur la couche d'ITO (figure 4G). A partir de la structure de la figure 4G, on peut éliminer les couches 17 et 16, comme déjà indiqué ci-dessus. La couche d'ITO est continue, tandis que la couche d'alignement de chaque cavité est séparée, par les parois 6, de la couche d'alignement dans les cavités voisines.

Il en résulte, là encore, une structure comportant la couche d'alignement, par exemple en polyimide frotté, au fond des cavités 4.

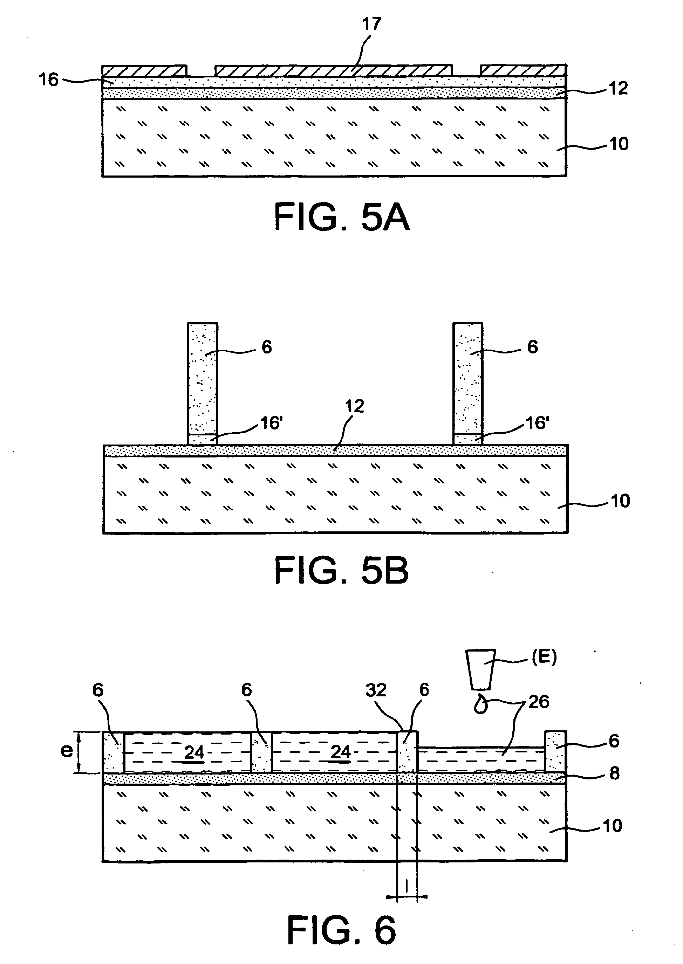

Une variante est illustrée en figures 5A et 5B. Les étapes qui précèdent sont identiques à celles décrites ci-dessus en liaison avec les figures 4A et 4B. Mais, ici, l'étape de gravure des ouvertures dans la couche 17 n'affecte ni la couche sacrificielle 16 ni la couche 12 d'alignement.

Le dispositif final, après dépôt de la résine 18, gravure des parois 6, élimination des couches 17 et 16, est celui de la figure 5B. Il reste une portion 16' de matériau sacrificiel sous chaque paroi 6.

Dans tous les cas on obtient une structure comportant des cavités 4 délimitées par des parois 6, une couche 12 d'alignement pour des cristaux liquides étant disposée au fond de chaque cavité. Cette couche est plane et uniforme au fond de chaque cavité. Elle peut être continue sous l'ensemble des parois 6 (cas des figures 3E et 5B) ou séparée par les parois 6 de la couche d'alignement des cavités voisines comme sur la figure 4F ou 4G. Dans tous les cas, il n'y a pas d'effet d'ombrage ou de contamination particulaire, à la différence de ce qui a été décrit ci-dessus en liaison avec la technique antérieure. Les parois 6 peuvent avoir une hauteur e de l'ordre de quelques µm à quelques dizaines de µm et par exemple supérieure à 10 µm. Leur largeur 1 (voir figure 6) peut être de l'ordre de quelques µm ou submicroniques, par exemple inférieure à 5 µm ou comprise entre 5 µm et 0,5 µm.

Le remplissage d'une ou plusieurs cavités peut ensuite être réalisé par un équipement E (figure 6) visant l'intérieur des cavités 4 et projetant le matériau 24 liquide sous forme d'un jet ou de gouttes 26, d'un volume qui peut être de l'ordre de plusieurs picolitres. Le liquide peut être délivré à l'aide d'une technique adaptée à la localisation de faible volume, soit plusieurs dizaines à centaines de picolitres. L'équipement E utilisé peut mettre en oeuvre une technique de dispense de liquide semblable à celle de la dispense par jet d'encre.

Le matériau liquide 24 peut remplir les cavités 4 partiellement ou complètement. Un remplissage total des cavités peut être effectué de manière à atteindre le sommet 32 des parois 6.

Le produit est terminé par le report (dans le cas le plus simple par laminage) d'un film protecteur 9 (figure 1), tel qu'un film plastique, identique ou non au matériau du support 10. Ce film est éventuellement recouvert des couches fonctionnelles adaptées pour la fonction finale (antireflets, couches dures, antisalissures,...).

Une individualisation du produit final est effectuée préalablement à son report sur la surface finale. Cette individualisation peut être réalisée avantageusement sur le support rigide ayant servi à la réalisation de l'empilement, mais ce n'est pas une nécessité. Si l'individualisation a lieu sur le support de réalisation, celle-ci peut se faire par laser, par ultrasons ou par outil tranchant. Une technique présentant les qualités suivantes sera préférée : assurer un préscellement de la périphérie, assurer un bon état de surface de la tranche pour un scellement optimum, une rapidité de réalisation adaptée à l'industrialisation. Cette individualisation s'accompagne d'un scellement périphérique qui assure l'étanchéité aux gaz et à l'humidité, une bonne tenue mécanique sur la durée de vie du produit, une qualité visuelle adaptée à des produits grand public (lorsque nécessaire, par exemple pour les lunettes).

L'invention permet d'obtenir un dispositif sans projections 7, 7' sur la couche d'alignement (à la différence de la figure 1) et sans effet d'ombrage, dû à un dépôt de part et d'autre des parois 6, le long de celles-ci, sur leurs parties perpendiculaires au substrat (là encore à la différence de la figure 1).

Un dispositif micro-optique à cristaux liquides décrit dans le cadre de la présente invention comporte des cavités délimitées par des parois, chaque cavité étant remplie au moins partiellement de cristaux liquides, une couche d'alignement pour des cristaux liquides, de préférence plane et uniforme, étant disposée au fond de chaque cavité.

La couche d'alignement peut être continue d'une cavité à l'autre et passer sous les parois.

Les parois peuvent séparer les couches d'alignement de cavités voisines.

Une couche de matériau ITO peut être disposée sous la couche d'alignement. Cette couche est continue, et n'est pas gravée.

En variante, les pieds des parois sont situés dans le substrat.

Selon un exemple, la couche d'alignement est une couche de polyimide frotté.

Du point de vue géométrique, les parois peuvent avoir une hauteur de l'ordre de quelques µm à quelques dizaines de µm, par exemple supérieure à 10 µm, et/ou une largeur de l'ordre de quelques µm ou submicronique, par exemple inférieure à 5 µm ou comprise entre 5 µm et 0,5 µm.

## Revendications

1. Procédé de formation de cavités (4) d'un dispositif micro-optique, comportant :
a) la formation, sur la surface plane d'un substrat support (10), d'une couche (12) d'alignement de cristaux liquides,
b) puis le dépôt d'une couche (16) sacrificielle de protection sur ladite couche d'alignement,
c) puis une gravure d'une partie d'au moins la couche (16) sacrificielle pour définir la position des parois (6),
d) puis la formation de parois (6) desdites cavités (4), dans les zones gravées de la couche (16) sacrificielle et l'élimination de la couche (16) sacrificielle de protection entre les parois (6) des cavités, le fond desdites cavités étant formé par ladite couche d'alignement.

2. Procédé selon la revendication 1, dans lequel la couche (12) d'alignement de cristaux liquides est plane.

3. Procédé selon la revendication 1 ou 2 l'étape d) comportant un dépôt puis une gravure d'une couche de résine (18) de façon à former lesdites parois des cavités.

4. Procédé selon l'une des revendications 1 à 3 comportant en outre, après l'étape b) et avant l'étape d):
- la formation d'une couche (17) de masque de gravure sur la couche (16) sacrificielle et l'ouverture de cette couche (17) de masque pour définir la position des parois (6),
- la gravure d'une partie d'au moins la couche sacrificielle (16) à travers la couche de masque,
et, après la formation des parois mais avant l'élimination de la couche (16) sacrificielle de protection :
- l'élimination de la couche (17) de masque de gravure.

5. Procédé selon l'une des revendications 1 à 4, la couche d'alignement (12) n'étant pas gravée sous la couche sacrificielle (16).

6. Procédé selon l'une des revendications 1 à 4, comportant en outre, avant l'étape d), une gravure d'une partie de la couche d'alignement (12) sous les zones gravées de la couche (16) sacrificielle.

7. Procédé selon la revendication 6, comportant en outre, avant l'étape d), une gravure d'une partie du substrat (10) sous les zones gravées de la couche d'alignement (12) et de la couche (16) sacrificielle.

8. Procédé selon l'une des revendications 1 à 6, comportant, avant dépôt de ladite couche (12) d'alignement, le dépôt d'une couche (20) en ITO, cette couche n'étant pas gravée avant l'étape d).

9. Procédé de formation d'un dispositif micro-optique à cristaux liquides, comportant :
- la formation de cavités de ce dispositif, comportant la mise en oeuvre d'un procédé selon l'une des revendications précédentes,
- l'introduction de cristaux liquides dans lesdites cavités (4) du dispositif,
- la formation d'une couche (9) de fermeture sur les parois des cavités.

## Patentansprüche

1. Verfahren zur Bildung von Hohlräumen (4) einer mikrooptischen Vorrichtung, wobei das Verfahren die folgenden Schritte aufweist:
a) die Bildung einer Flüssigkristall-Ausrichtungsschicht (12) auf der flachen Oberfläche eines Trägersubstrats;
b) dann die Aufbringung einer Schutz-Opferschicht (16) über dieser Ausrichtungsschicht;
c) dann eine Ätzung eines Teils zumindest der Opferschicht (16) zur Bestimmung der Position der Wände (6);
d) dann die Bildung von Wänden (6) der Hohlräume (4) in den geätzten Bereichen der Opferschicht (16) und die Entfernung der Schutz-Opferschicht (16) zwischen den Wänden (6) der Hohlräume, wobei der Boden der Hohlräume durch die Ausrichtungsschicht gebildet wird.

2. Verfahren nach Anspruch 1, wobei die Flüssigkristall-Ausrichtungsschicht (12) plan ist.

3. Verfahren nach Anspruch 1 oder 2, **dadurch gekennzeichnet, dass** der Schritt d) nach einer Ätzung eine Aufbringung einer Harzschicht (18) aufweist, um die Wände der Hohlräume zu bilden.

4. Verfahren nach einem der Ansprüche 1 bis 3, wobei das Verfahren nach Schritt b) und vor Schritt d) darüber hinaus die folgenden Schritte aufweist:
- die Bildung einer Ätz-Maskenschicht (17) auf der Opferschicht (16) sowie auf der Öffnung der Maskenschicht (17) zur Bestimmung der Position der Wände (6);
- die Ätzung eines Teils zumindest der Opferschicht (16) durch die Maskenschicht;
und nach der Bildung der Wände, jedoch vor der Entfernung der Schutz-Opferschicht (16):
- die Entfernung der Ätz-Maskenschicht (17).

5. Verfahren nach einem der Ansprüche 1 bis 4, wobei die Ausrichtungsschicht (12) nicht unter der Opferschicht (16) geätzt wird.

6. Verfahren nach einem der Ansprüche 1 bis 4, welches darüber hinaus vor dem Schritt d) eine Ätzung eines Teils der Ausrichtungsschicht (12) unter den geätzten Bereichen der Opferschicht (16) aufweist.

7. Verfahren nach Anspruch 6, welches darüber hinaus vor dem Schritt d) eine Ätzung eines Teils des Substrats (10) unter den geätzten Bereichen der Ausrichtungsschicht (12) und der Opferschicht (16) aufweist.

8. Verfahren nach einem der Ansprüche 1 bis 6, welches vor der Aufbringung der Ausrichtungsschicht (12) die Aufbringung einer Schicht (20) aus Indiumzinnoxid ITO aufweist, wobei die Schicht nicht vor dem Schritt d) geätzt wird.

9. Verfahren zur Bildung einer mikrooptischen Flüssigkristallvorrichtung, welches die folgenden Schritte aufweist:
- die Bildung von Hohlräumen der Vorrichtung, wobei die Bildung die Umsetzung eines Verfahrens gemäß einem der vorhergehenden Ansprüche aufweist;
- die Einbringung von Flüssigkristallen in die Hohlräume (4) der Vorrichtung;
- die Bildung einer Deckschicht (9) über den Hohlraumwänden.

## Claims

1. A process for formation of cavities (4) of a micro-optic device, comprising:
a) formation, on the surface plane of a support substrate (10), of an alignment layer (12) of liquid crystals,
b) then the deposition of a sacrificial protective layer (16) on said alignment layer,
c) then, etching of parts of at least the sacrificial layer (16) to define the position of the walls (6),
d) then, formation of walls (6) of said cavities (4), in the etched portions of the sacrificial layer (16) and elimination of the sacrificial protective layer (16) between the walls (6) of the cavities, the base of said cavities being formed by said alignment layer.

2. Process according to Claim 1, wherein the alignment layer (12) of liquid crystals is plane.

3. Process according to Claim 1 or 2, step d) comprising deposition of a resin layer (18) so as to form said walls of the cavities.

4. Process according to any of claims 1 to 3, further comprising, after step b) and before step d) :
- formation of an etching mask layer (17) on the sacrificial layer (16) and opening of this mask layer (17) to define the position of the walls (6),
- etching of parts of at least the sacrificial layer (16) through the mask layer,
and, after formation of the walls of said cavities, but before elimination of the sacrificial protective layer (16):
- elimination of the etching mask layer (17).

5. Process according to any of claims 1 to 4, the alignment layer (12) not being etched under the sacrificial layer (16).

6. Process according to any of claims 1 to 4, further comprising, before step d), etching of a part of the alignment layer (12) under the etched zones of the sacrificial layer (16).

7. Process according to Claim 6, further comprising, before step d), etching of a part of the substrate (10) under the etched zones or parts of the alignment layer (12) and of the sacrificial layer (16).

8. Process according to any of claims 1 to 6, further comprising, before deposit of said alignment layer (12), the deposit of an ITO layer (20), this layer not being etched before step d).

9. A process for formation of a liquid crystal micro-optic device, comprising:
- formation of cavities of this device, comprising the use of a process according to any of the preceding claims,
- introduction of liquid crystals to said cavities (4) of the device,
- formation of a closing layer (9) on the walls of the cavities.
